(19) **Europäisches Patentamt**
**European Patent Office**
**Office européen des brevets**

(11) **EP 3 126 165 B1**

(12) **EUROPEAN PATENT SPECIFICATION**

(45) Date of publication and mention
of the grant of the patent:
**13.10.2021 Bulletin 2021/41**

(51) Int Cl.:
**B60G 3/06** (2006.01)     **B60G 3/20** (2006.01)
**B60G 11/08** (2006.01)

(21) Application number: **15721848.8**

(86) International application number:
**PCT/IB2015/052450**

(22) Date of filing: **02.04.2015**

(87) International publication number:
**WO 2015/151064 (08.10.2015 Gazette 2015/40)**

(54) **DOUBLE WISHBONE OR MCPHERSON SUSPENSION WITH TRANSVERSE LEAF SPRING AND DIMENSIONING METHOD THEREOF**

DOPPELQUERLENKER- ODER MCPHERSON-AUFHÄNGUNG MIT QUERBLATTFEDER UND DIMENSIONIERUNGSVERFAHREN DAFÜR

SUSPENSION À DOUBLE TRIANGULATION OU DU TYPE MCPHERSON AVEC UN RESSORT À LAME TRANSVERSALE ET PROCEDE DE DIMENSIONNEMENT ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.04.2014 IT MI20140586**

(43) Date of publication of application:
**08.02.2017 Bulletin 2017/06**

(73) Proprietor: **Iveco S.p.A.**
**10156 Torino (IT)**

(72) Inventors:
• **PIASCO, Federico**
  **I-10060 Candiolo (IT)**
• **ARCHITETTO, Lorenzo**
  **I-10137 Torino (IT)**

(74) Representative: **Franzolin, Luigi et al**
**Studio Torta S.p.A.**
**Via Viotti, 9**
**10121 Torino (IT)**

(56) References cited:
**EP-A1- 0 857 590        EP-A1- 1 645 445**
**EP-A1- 2 338 707        DE-A1- 2 451 671**
**DE-A1- 4 140 236        US-A- 4 619 466**
**US-A1- 2013 113 177**

• **BASTOW D ED - BASTOW D: "FRONT SUSPENSION", 1 January 1987 (1987-01-01), CAR SUSPENSION AND HANDLING, LONDON, PENTECH PRESS, GB, PAGE(S) 182/183, XP002040806, the whole document**

**Description**

Field of the invention

The present invention relates to the field of vehicle suspensions, in particular to a quadrilateral or McPherson suspension with cross leaf spring, as per the preamble of claim 1, and to a dimensioning method of such a suspension.

State of the art

Quadrilateral suspensions with cross leaf spring have been employed for many years, in particular, for the front suspensions of industrial vehicles.

To ensure an optimal dynamic behaviour, these independent wheel suspensions are generally supplemented by an anti-roll bar which connects the chassis to the components of the suspension, such as lower oscillating arms, shock absorbers, etc., so as to restrict the rolling motion of the vehicle.

When the suspensions of the same axle are subjected to symmetrical vertical loads, the anti-roll bar does not react. On the other hand, the anti-roll bar cooperates with the suspensions in proportion to the difference between the vertical loads acting on the suspensions of the same axle.

Taking into account the loads applied by the lower oscillating arms to the ends of the cross leaf spring:

- the "vertical stiffness upon symmetrical loads" of the leaf spring is defined as the ratio between the vertical load per unit applied to one end of the leaf spring for the vertical displacement of the same end, while both opposite ends of the leaf spring are loaded with identical vertical loads, having the same direction;
- the "vertical stiffness upon antisymmetrical loads" of the leaf spring is defined as the ratio between the vertical load per unit applied to one end of the leaf spring for the vertical displacement of the same end, while the opposite ends of the leaf spring are loaded with identical vertical loads, but having opposite direction.

An optimal performance for the vehicle dynamics is achieved when this latter opposes to the rolling a vertical stiffness upon antisymmetrical vertical loads which is at least twice the vertical stiffness upon symmetrical vertical loads.

According to the prior art, the aforesaid result is necessarily achieved by using an anti-roll bar with its relating elements connecting the bar to the

body of the vehicle and to the suspension components, thus having an increase in weight and size.

On the other hand, the removal of such bar deteriorates the performance of the vehicle, particularly on bends.

DE 41 40 236 A1 discloses a quadrilateral or McPherson suspension according to the preamble of claim 1.

US4619466A discloses a wheel suspension, especially a front wheel suspension for motor vehicles, in which the wheel carriers of mutually oppositely disposed wheels are connected each with a guide member, especially with a cross guide member which is pivotally connected at the body displaceable in the vertical direction by the interposition of a shock absorber. The cross guide member of each wheel is connected with the free end of a leaf spring, especially of a leaf spring of a fibrous material, which extends transversely to the vehicle longitudinal axis and is supported at the vehicle body. The free ends of the leaf spring are connected with the cross guide members at a distance with respect to the latter by way of interposed guide arms. The guide arms are retained in elastic bearings relatively movably and pivotally to the cross guide members and include at their ends opposite these bearings, clamping devices for clampingly fastening the leaf spring. The leaf spring performs the function of the anti-roll bar.

US2013/113177A1 discloses a single-pivot suspension strut axle for a passenger car, including a wheel carrier/pivot bearing carrying the wheel and a brake disk non-rotatably connected with the wheel relative to a rotational axis thereof. A suspension strut is fastened to the wheel carrier/pivot bearing and, at another end, is supported at the vehicle body. The wheel carrier/pivot bearing is guided by a supporting joint situated close to the wheel center plane by a lower control arm, representing an A-arm, and by a tie rod. A section of the control arm connected with the supporting joint projects through the ring-shaped brake disk. A leaf spring element oriented in the transverse direction of the vehicle provides proportional support for the vehicle body on the wheel, and is supported, on one side, at the control arm and, on another side, directly or indirectly, at the vehicle body.

EP0857590 A1 discloses a unit for the flexible suspension of a pair of wheels from a vehicle chassis, equipped with a load-bearing structure designed to be fastened to the said chassis, a pair of lower and upper arms at each side of the vehicle, joined together by mount of the relevant wheel and oscillating in relation to load-bearing structure about fixed axes respectively, a leaf spring fitted between mounting elements of wheels and load-bearing structure with its axis positioned transversely in relation to the vehicle's direction of motion, and damping elements to damp the oscillations of leaf spring. Unit is also equipped with a pair of fasteners connecting leaf spring to the load-bearing structure, arranged as lateral strips in opposition to the vehicle centreline and whose position along axis of leaf spring may be adjusted to alter the elastic properties of leaf spring and to adapt it to the total train weight during installation. The leaf spring performs the function of the anti-roll bar.

EP23387078A1 discloses a suspension unit for a transport vehicle of the unitized body type or of the unitized frame type, with front-wheel drive or with rear-wheel drive comprising, coupled to each wheel hub of at least the front wheels of said vehicle, shock absorbing means fixed to said body and to a frame of said vehicle; a dynamic upper arm element fixed to said wheel hub and to said body, in order to oscillate together with the wheel hub itself; leaf spring means connected to said wheel hub and transversally extending with respect to the longitudinal axis of the vehicle. The suspension unit does not comprise any roll bar.

DE2451671A1 discloses a stabilising cross member for independent suspension. Two independently sprung wheels are linked to special cross members whose other ends are hinged on the chassis about longitudinal axes . The cross members are made from pressed steel for simplicity and lightness and serve to control the wheel setting. The ends of the cross members are also linked by a flat metal spring which is fitted to one side of the cross members in such a way that it is free to flex without touching the chassis. Suspension movements cause the flat spring to flex in one direction from the flat setting thereby reducing any twisting movements which would fatigue the spring. The suspension unit does not comprise any roll bar.

XP002040806 discloses that the anti-roll function can be performed by a cross leaf spring instaed of an anti-roll bar.

Summary of the Invention

Therefore, the object of the present invention is to overcome all the aforesaid drawbacks and to indicate a method for dimensioning a quadrilateral or McPherson suspension with cross leaf spring which allows to obtain the same performances of a similar suspension fitted with an anti-roll bar.

In other words, it is an object of the present invention to provide a method for dimensioning a quadrilateral or McPherson suspension with cross leaf spring which allows the removal of the anti-roll bar.

It is the object of the present invention to provide a method for dimensioning a quadrilateral suspension with cross leaf spring.

It is also an object of the present invention to provide a quadrilateral suspension with cross bar dimensioned by means of the above method.

This suspension is particularly applicable to the field of light industrial and commercial vehicles.

The claims describe preferred embodiments of the present invention, forming an integral part of the present description.

Brief description of the figures

Further purposes and advantages of the present invention will become clear from the following detailed description of an embodiment thereof (and of its variants) and from the annexed drawings, given purely as illustrative and non limitative example, wherein:

Figure 1 shows a front view of half axle provided with a quadrilateral suspension with cross leaf spring,
Figure 2 shows a top view of the half axle of Figure 1,
Figure 3 shows a front view of the longitudinal section of the axle shown in Figure 2;
Figures 4a, 4b and 4c show possible conditions of the cross leaf spring, respectively resting, with substantially horizontal lower arms, subject to symmetrical vertical loads, and subject to antisymmetrical vertical loads;
Figure 5 shows size parameters taken from Figure 4a;
Figure 6 shows a preferred embodiment of the invention applied to a McPherson schema.

The same reference numbers and letters in the figures refer to the same elements or components.

In the present description, the term "second" component does not imply the presence of a "first" component. These terms are in fact used only for clarity and are not intended as limiting.

Detailed description of the embodiments

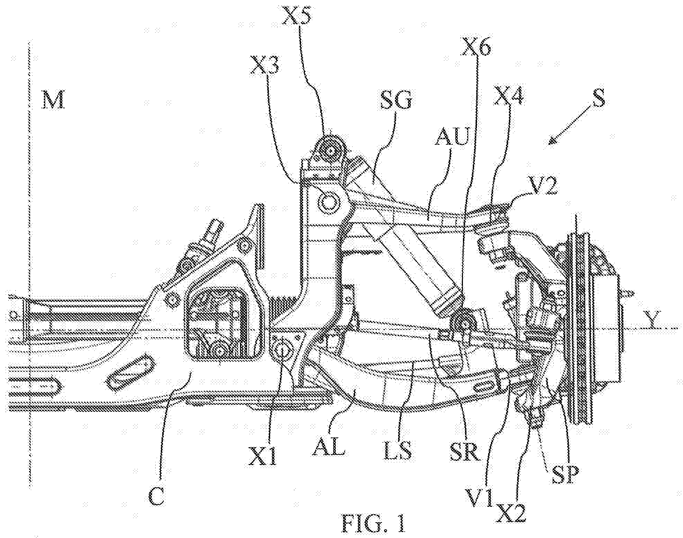

Figure 1 shows a quadrilateral suspension with cross leaf spring dimensioned by the method of the present invention. The method of the present invention is also applicable to a McPherson layout.

Since the axle is symmetrical about the axis M, only half axle is shown.

The fixed part C defines a structural part of the body of the vehicle to which the suspensions of the same axle are connected.

It is shown the lower arm AL, generally being substantially V-shaped or Y-shaped, whose two forked ends are hinged to the fixed part C by means of the hinge X1. The vertex V1 of the lower arm, opposite to the aforesaid forked ends, is connected to the lower part of the wheel hub SP by means of a ball joint X2.

It is also shown the upper arm AU, also generally being substantially V-shaped or Y-shaped, whose two forked ends are hinged to the fixed part C by means of the hinge X3, above the hinge X1. The vertex V2 of the upper arm AU is connected to the upper part of the wheel hub SP by means of a ball joint X4.

A shock absorber SG has two opposite ends, of which a first end is hinged to the fixed part C by means of the hinge X5, above the hinge X3, while a second end is hinged, by means of the hinge X6, to the lower arm AL, close to said vertex V1.

Figure 1 shows a small portion of the cross leaf spring LS having two opposite ends, whose first end is connected to the lower arm AL, shown in Figure 1, while the other end is connected to the lower arm of the suspension, not shown, of the opposite side of the axle relative to the axis M.

Please note that the attribute "cross" refers to the vertical development of a vehicle to which the axle is intended to be associated. Therefore, the leaf spring LS has a longitudinal development parallel to the longitudinal development Y of the axle shown in the Figures.

Please also note that the opposite ends of the leaf spring are bound to crawl on their respective seats B1, formed on the lower arms of the suspension.

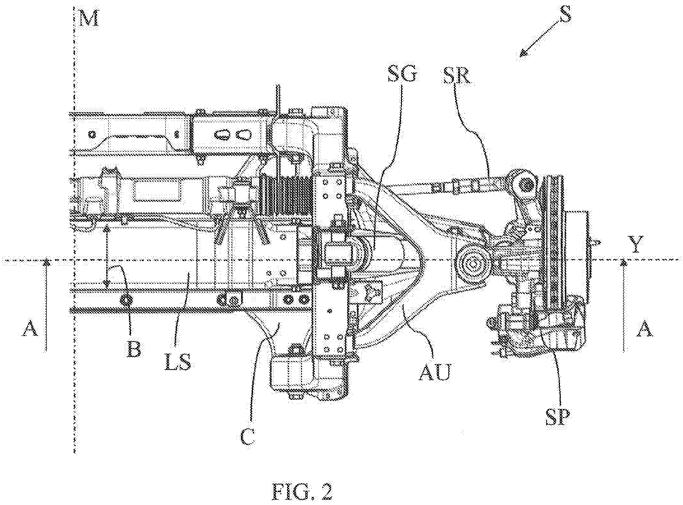

With reference to Figure 2, it shows the V-shape or Y-shape defined by the upper arm AU. It also shows a portion of the shock absorber SG, the wheel hub SP and the steering linkage, which can be not present when the axle is not steered. In this case, the ball joints X2 and X4 are simple hinges, not having to ensure rotation of the wheel hub SP around an axis perpendicular to the axis of development Y.

Figure 2 shows a further portion of the one cross leaf spring LS, which extends from a suspension to the other of a same axle. In particular, it shows the width B of the leaf spring.

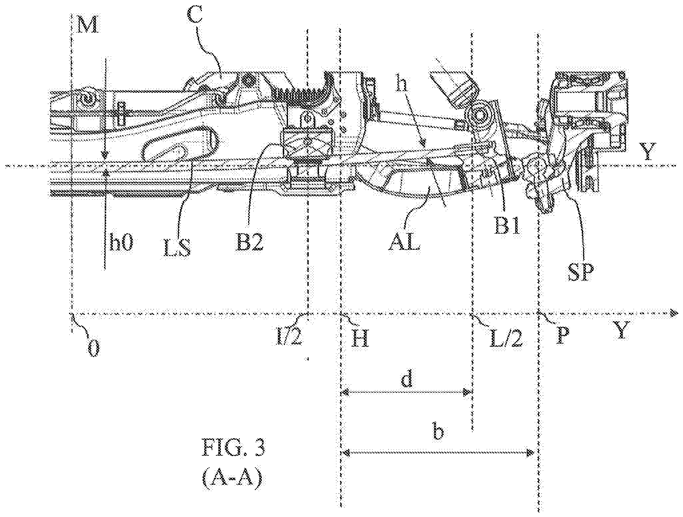

Figure 3 shows the longitudinal section A-A of the axle shown in Figure 2.

The axis of development Y is replicated below for a better understanding of the diagram of Figure 3. The zero reference point 0 is given by the intersection of the axis of development Y with the axis of symmetry M, perpendicular to the axis of development Y.

An intermediate constraint B2 constrains the leaf spring LS to the fixed part C, preferably by means of rubber blocks, while the end constraint B1 constrains one end of the leaf spring LS to the lower arm AL, preferably by means of rubber blocks.

The point I/2 on the axis of development Y is the projection of the midpoint (or barycentric point) of the constraint B2 on the axis Y, while the point L/2 is the projection of the midpoint (or barycentric point) of the end constraint B1.

The aforesaid projection points also identify the distances from zero, namely from the axis M.

The point P is the projection on the axis Y of the connection between the wheel hub SP and the lower arm AL.

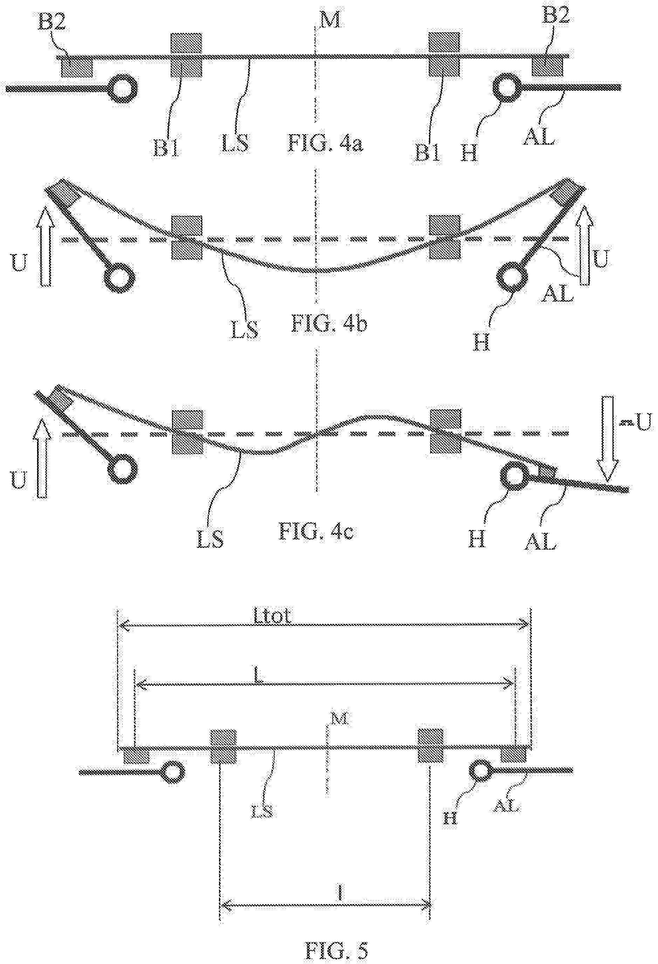

'd' is the distance/difference between the point H and the point L/2, and b is the distance/difference between H and the point P. H is the hinging point of each lower arm AL (shown for example in Figure 4).

"ksosp" is the "vertical stiffness upon symmetrical loads" of the suspension S, ks is the "vertical stiffness upon symmetrical loads of the leaf spring" and "ka" is the "vertical stiffness upon antisymmetrical loads" of the leaf spring.

Figure 4a shows a condition wherein the lower arms AL are substantially horizontal.

Figure 4b shows a condition wherein symmetrical vertical loads U having same direction are applied to the two opposite ends of the leaf spring of a same axle.

Figure 4c shows a condition wherein antisymmetrical vertical loads U, namely having same modulus and opposite direction, are applied to the two opposite ends of the leaf spring of a same axle.

The ends of the leaf spring crawl on seats having a predetermined axial width. Therefore, the ends of the leaf spring are the points corresponding to the middle or barycentric part of the seats B1. The distance between these ends is indicated as the effective length L of the leaf spring, while the total length Ltot of the leaf spring can be certainly greater than its effective length L. This comparison is well illustrated with reference to Figure 5, corresponding to the condition of Figure 4a.

In the following, reference will be made to the effective length L.

The leaf spring LS also has a width B and a thickness h(Y).

According to a preferred embodiment of the present invention, L = 1365 mm $\pm$ 20 mm, B = 90 mm $\pm$ 15 mm and the thickness h(Y) has a constant portion h0 = 17 mm $\pm$ 2 mm between the constraints B1 (i.e. between 0 and I), an end thickness 'he' at the point L/2 of the leaf spring with he = 12.5 mm $\pm$ 5 mm, namely measured in the barycentre of the end blocks B2 of the leaf spring, and a portion having a parabolic face between the constraints B1 and B2, namely between I/2 and L/2 on the axis Y (Fig. 2, 3 and 5).

It is therefore assumed that the two opposite faces of the leaf spring have a profile which is constant between 0 and B1 and parabolic between B1 and B2.

Furthermore, R = b/(bd) = 1.4 $\pm$ 0.15, which is a dimensionless number forming a constructive parameter of the lower oscillating arm of the suspension S.

"E" represents the modulus of longitudinal elasticity or Young modulus of the material of the leaf spring, generally variable between 195 GPa and 210 GPa.

When:

$$ksosp = 74 \text{ N/mm} \pm 20 \text{ N/mm}$$

it is obtained:

$$ks = ksosp * R^2 = 145 \text{ N/mm} \pm 20 \text{ N/mm} \quad [eq. 1],$$

As mentioned above, it is desirable to have $ka \cong 2*ks$.

This result can be obtained by suitably dimensioning the thickness h(Y) of the leaf spring in the parabola between the two constraints B1 and B2, as described by the following equation valid for a distance I = 800 mm $\pm$ 10 mm:

$$h(Y) = 2*((Y-(cost_1))/(cost_2))^{0.5} \text{ when } Y \text{ varies between } I/2 \text{ and } L/2 \quad [eq. 2]$$

wherein:

- $cost_1$ = 1015.00942
- $cost_2$ = -8.51224

In this case Y also represents the independent variable along the axis Y.

Moreover:

$$h0 = h(I/2) \text{ and } he = h(L/2)$$

The described dimensioning allows to achieve the aforesaid desirable ratio between stiffness upon symmetrical vertical loads and stiffness upon antisymmetrical vertical loads, thus obtaining the same performance of a similar schema with an anti-roll bar. Obviously, this allows to avoid the installation of an anti-roll bar.

Therefore the described dimensioning achieves a surprising effect, not previously seen in the prior art.

More particularly, the aforesaid method allows the dimensioning of the leaf spring and the appropriate positioning of the blocks B1, centrally restraining the leaf spring within the fixed part C, for a quadrilateral or McPherson suspension.

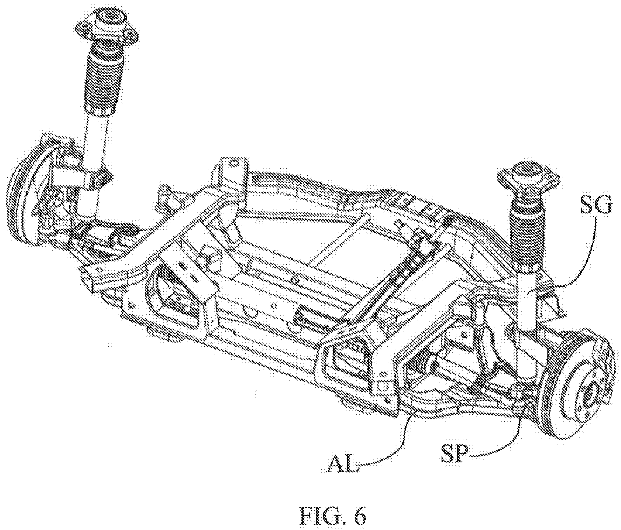

With reference to Figure 6, it shows a perspective representation of an axle with McPherson suspensions which differs from the aforesaid quadrilateral layout because of the absence of the upper arm and because the shock absorber is fixed with the wheel hub SP.

If the person skilled in the art wished to obtain a certain stiffness ka double than ks, the leaf spring should be simply drawn with a variable thickness equal to h(Y) and a width equal to B.

Various embodiments of the described nonlimiting example are possible without departing from the scope of protection of the present invention, as defined by the claims.

From the above description, the person skilled in the art can carry out the invention without introducing any further construction details. The elements and features shown in the various preferred embodiments can be combined without leaving the scope of protection of the present application. What described in the description of the state of the art, unless specifically excluded in the detailed description, must be considered in combination with the features of the present invention, thus forming an integral part of the present invention.

**Claims**

1. Quadrilateral or McPherson suspension (S) with cross leaf spring, comprising

- a lower oscillating arm (AL) having a first part hinged to a fixed part (C) of a vehicle and a second part connected to a wheel hub (SP),

- a shock absorber (SG) having a first end hinged to said fixed part (C) of the vehicle and a second end, opposite to the first one, hinged to said wheel hub (SP) or to said lower oscillating arm (AL),
- a leaf spring (LS), defining a longitudinal development (Y), arranged parallel to a symmetrical vehicle axle defined by the suspension (S), having an intermediate point of reference (M), an end point (L/2) connected to said lower arm (AL) and a constraint point (B2, 1/2), intermediate between the first two, constrained to said fixed part (C),

wherein the following distances measured along said longitudinal development (Y) starting from said intermediate point of reference (M) are defined:

- P = distance of said connection (X2) between lower arm (AL) and wheel hub (SP),
- L/2 = distance from said end point (L/2) of the leaf spring (LS),
- H = distance of said hinging (X1) between said first part of the lower arm and said fixed part (C),
- 1/2 = distance of said intermediate constraint point (B2);

wherein I/2 is smaller than H and the leaf spring (LS) comprises a portion (h0) having a constant thickness between said intermediate reference point (M) and I/2 and a parabolic decreasing thickness between I/2 and L/2;
**characterized in that**:

- d is a difference/distance between H and L/2 and b a difference/distance between H and P,

$$R = b/(b-d),$$

$$ks = ksosp * R^2,$$

where 'ks' is the stiffness of the leaf spring upon symmetrical vertical loads and 'ksosp' is the stiffness of the suspension upon symmetrical vertical loads,
wherein said parabolic thickness between I/2 and L/2 is defined by:

$$h(Y) = 2*((Y-(cost_1))/(cost_2))^{0.5},$$

where Y is an independent variable, $cost_1$ = 1015.00942 and $cost_2$ = -8.51224 and wherein the material of said leaf spring has a Young module comprised between 195 GPa and 210 GPa.

2. Quadrilateral or McPherson suspension (S) according to claim 1, wherein

- I = 800 mm $\pm$10 mm, and R = b/(b-d) = 1.4 $\pm$0.15;
- the leaf spring defining a stiffness 'ks' upon symmetrical vertical loads equal to 145 N/mm $\pm$20 N/mm and a stiffness 'ka' upon asymmetrical 1 vertical loads equal to approximately 2*ks, and wherein said leaf spring (LS) has a length L = 1365 mm $\pm$20 mm, a width (B) = 90 mm $\pm$ 15 mm, a thickness h0 = 17 mm $\pm$ 2 mm and an end thickness he = 12.5 mm $\pm$ 5 mm.

3. Dimensioning method of a suspension (S) according to claim 1 or 2, wherein when

- said leaf spring (LS) has an effective length L = 1365 mm $\pm$20 mm, a width (B) = 90 mm $\pm$15 mm, and
- R = 1.4 $\pm$0.15
- ksosp = 74 N/mm $\pm$20 N/mm
- ks = 145 N/mm $\pm$20 N/mm

$$ka \cong 2 * ks,$$

- I = 800 mm $\pm$10 mm;
then
h0 = 17 mm $\pm$2 mm and he = h(L/2) = 12.5 mm $\pm$ 5 mm.

**Patentansprüche**

1.  Vierseitige oder McPherson-Aufhängung (S) mit Querblattfeder, umfassend

    - einen unteren Schwenkarm (AL), mit einem ersten Teil, der an einen feststehenden Teil (C) eines Fahrzeugs angelenkt ist und einem zweiten Teil, der mit einer Radnabe (SP) verbunden ist,
    - einen Stoßdämpfer (SG), mit einem ersten Ende, das an den feststehenden Teil (C) des Fahrzeugs angelenkt ist und einem zweiten, dem ersten Ende gegenüberliegenden Ende, welches an die Radnabe (SP) oder an den unteren Schwenkarm (AL) angelenkt ist,
    - eine Blattfeder (LS), welche eine Längserstreckung (Y) definiert und parallel zu einer Fahrzeugsymmetrieachse angeordnet ist, welche durch die Aufhängung (S) definiert wird, mit einem mittleren Referenzpunkt (M), einem Endpunkt (L/2), der mit dem unteren Arm (AL) verbunden ist und einem Festlegungspunkt (B2, I/2) zwischen den ersten beiden, der an dem feststehenden Teil (C) festgelegt ist,

    wobei die folgenden Abstände, gemessen entlang der Längserstreckung (Y) beginnend von dem mittleren Referenzpunkt (M) definiert sind:

    - P = Abstand der Verbindung (X2) zwischen dem unteren Arm (AL) und der Radnabe (SP),
    - L/2 = Abstand von dem Endpunkt (L/2) der Blattfeder (LS),
    - H = Abstand des Gelenkpunkts (X1) zwischen dem ersten Teil des unteren Arms und dem feststehenden Teil (C),
    - I/2 = Abstand des mittleren Festlegungspunkts (B2),

    wobei I/2 kleiner ist als H und die Blattfeder (LS) einen Teil (h0) mit einer konstanten Dicke zwischen dem mittleren Referenzpunkt (M) und I/2 und einer parabolisch abnehmenden Dicke zwischen I/2 und L/2 umfasst;
    **dadurch gekennzeichnet, dass**

    - d ein(e) Differenz/Abstand zwischen H und L/2 ist und b ein(e) Differenz/Abstand zwischen H und P ist,
    - R = b/ (b-d) ist,
    - ks = ksosp * $R^2$ ist,

    wobei "ks" die Steifheit der Blattfeder gegen symmetrische vertikale Lasten ist und "ksosp" die Steifheit der Aufhängung gegen symmetrische vertikale Lasten ist,
    wobei die parabolische Dicke zwischen I/2 und L/2 wie folgt definiert ist:

$$h\,(Y) = 2*((Y\text{-}(cost_1))/cost_2))^{0,5},$$

    wobei Y eine unabhängige Variable ist, $cost_1$ = 1015,00942 und $cost_2$ = -8,51224 ist und wobei das Material der Blattfeder ein Youngsches Modul aufweist, welches zwischen 195 GPa und 210 GPa liegt.

2.  Vierseitige oder McPerson-Aufhängung (S) gemäß Anspruch 1, bei welcher

    - I = 800 mm $\pm$ 10 mm und R = b/ (b-d) = 1,4 $\pm$ 0,15 ist; und
    - die Blattfeder eine Steifheit "ks" gegenüber symmetrischen vertikalen Lasten von 145 N/mm $\pm$ 20 N/mm und eine Steifheit "ka" gegenüber assymmetrischen vertikalen Lasten von annähernd 2*ks aufweist, wobei die Blattfeder (LS) eine Länge von L = 1365 mm $\pm$ 20 mm, eine Breite (B) = 90 mm $\pm$ 15 mm, eine Dicke h0 = 17 mm $\pm$ 2mm und eine Enddicke he = 12,5 mm $\pm$ 5 mm aufweist.

3.  Dimensionierungsverfahren für eine Aufhängung (S) gemäß Anspruch 1 oder 2, wobei dann, wenn

    - die Blattfeder (LS) eine effektive Länge von L = 1365 mm $\pm$ 20 mm und eine Breite (B) = 90 mm $\pm$ 15 mm aufweist und
    - R = 1,4 $\pm$ 0,15
    - ksosp = 74 N/mm $\pm$ 20 N/mm
    - ks = 145 N/mm $\pm$ 20 N/mm

$$ka \cong 2 * ks,$$

und
- I = 800 mm $\pm$ 10 mm
sind, ist
h0 = 17 mm $\pm$ 2 mm und he = h(L/2) = 12,5 mm $\pm$ 5 mm.


**Revendications**

1. Suspension quadrilatérale ou de type McPherson (S) avec un ressort à lames transversal, comprenant :

   un bras oscillant inférieur (AL) ayant une première partie articulée à une partie fixe (C) d'un véhicule et une seconde partie raccordée à un moyeu de roue (SP),
   un amortisseur (SG) ayant une première extrémité articulée à ladite partie fixe (C) du véhicule et une seconde extrémité, opposée à la première, articulée audit moyeu de roue (SP) ou audit bras oscillant inférieur (AL),
   un ressort à lames (LS) définissant un développement longitudinal (Y), agencé parallèlement à un essieu de véhicule symétrique défini par la suspension (S), ayant un point de référence intermédiaire (M), un point d'extrémité (L/2) raccordé audit bras inférieur (AL) et un point de contrainte (B2, I/2), intermédiaire par rapport aux deux premiers, contraint à ladite partie fixe (C),
   dans laquelle les distances suivantes mesurées le long dudit développement longitudinal (Y) à partir dudit point de référence intermédiaire (M) sont définies :

   P = distance dudit raccordement (X2) entre le bras inférieur (AL) et le moyeu de roue (SP),
   L/2 = distance à partir dudit point d'extrémité (L/2) du ressort à lames (LS),
   H = distance de ladite articulation (X1) entre ladite première partie du bras inférieur et ladite partie fixe (C),
   I/2 = distance dudit point de contrainte intermédiaire (B2) ;

   dans laquelle I/2 est inférieure à H et le ressort à lames (LS) comprend une partie (h0) ayant une épaisseur constante entre ledit point de référence intermédiaire (M) et I/2 et une épaisseur décroissante parabolique entre I/2 et L/2 ;
   **caractérisée en ce que** :

   d est une différence/distance entre H et L/2 et b une différence/distance entre H et P,

   $$R = b/(b-d),$$

   $$Ks = ksosp * R^2,$$

   où « ks » est la rigidité du ressort à lames suite aux charges verticales symétriques et « ksosp » est la rigidité de la suspension suite aux charges verticales symétriques,
   dans laquelle ladite épaisseur parabolique entre I/2 et L/2 est définie par :

   $$h(Y) = 2 * ((Y - (cost_1))/(cost_2))^{0,5},$$

   où Y est une variable indépendante, $cost_1$ = 1015,00942 et $cost_2$ = - 8,51224 et dans laquelle le matériau dudit ressort à lames a un module de Young compris entre 195 GPa et 210 GPa.

2. Suspension quadrilatérale ou de type McPherson (S) selon la revendication 1, dans laquelle :

   I = 800 mm $\pm$ 10 mm, et R = b/(b-d) = 1,4 $\pm$ 0,15 ;
   le ressort à lames définissant une rigidité « ks » suite aux charges verticales symétriques égale à 145 N/mm $\pm$ 20 N/mm et une rigidité « ka » suite aux charges verticales asymétriques égale approximativement à 2 * ks, et dans laquelle ledit ressort à lames (LS) a une longueur L = 1365 mm $\pm$ 20 mm, une largeur (B) = 90 mm $\pm$ 15

mm, une épaisseur h0 = 17 mm ± 2 mm et une épaisseur d'extrémité he = 12,5 mm ± 5 mm.

3. Procédé de dimensionnement d'une suspension (S) selon la revendication 1 ou 2, dans lequel, lorsque :

ledit ressort à lames (LS) a une longueur effective L = 1365 mm ± 20 mm, une largeur (B) = 90 mm ± 15 mm, et
R = 1,4 ± 0,15
ksosp = 74 N/mm ± 20 N/mm
ks = 145 N/mm ± 20 N/mm

$$ka \cong 2 * ks,$$

l = 800 mm ± 10 mm ;
alors
h0 = 17 mm ± 2 mm et he = h(L/2) = 12,5 mm ± 5 mm.

FIG. 1

FIG. 2

FIG. 3
(A-A)

B2          M          B2

B1    LS    FIG. 4a    B1    H    AL

U        U

LS    FIG. 4b    AL

H

U        U

LS    FIG. 4c    H    AL

Ltot

L

M

LS    H    AL

l

FIG. 5

SG

AL

SP

FIG. 6

**EP 3 126 165 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- DE 4140236 A1
- US 4619466 A
- US 2013113177 A1
- EP 0857590 A1
- EP 23387078 A1
- DE 2451671 A1